# EUROPÄISCHE PATENTANMELDUNG

(11) **EP 0 982 180 A1**
(43) Veröffentlichungstag der Anmeldung: **01.03.2000**
(21) Anmeldenummer: 99117036.6
(22) Anmeldetag: 30.08.1999
(51) Int. Cl.: B60N 2/24

(54) **Fahrgastsitz mit Hohlräumen**

(30) Priorität: 28.08.1998 DE 19839325
(71) Anmelder: Sulo Eisenwerk Streuber & Lohmann GmbH, 32051 Herford (DE)
(72) Erfinder: Klein, Adolf, 32049 Herford (DE); Ehemann, Ernst K., 76227 Karlsruhe (DE)
(74) Vertreter: Alber, Norbert, Dipl.-Ing.

(57) **Zusammenfassung**

Ein Fahrgastsitz für ein Personenbeförderungsfahrzeug ist als Kunststoffspritzteil hergestellt. Er besteht aus einem Sitzteil (1) und einer daran befestigten Rückenlehne (2). Die Rückenlehne weist an ihren Längsseiten jeweils mindestens einen sich in Längsrichtung erstreckenden rohrförmigen Hohlraum (3,4) auf.

## Beschreibung

Die Erfindung betrifft einen Fahrgastsitz für ein Personenbeförderungsfahrzeug nach dem Oberbegriff des Anspruchs 1, welcher als Kunststoffspritzteil hergestellt ist und ein Sitzteil mit einer daran befestigten Rückenlehne aufweist.

Ein derartiger Fahrgastsitz wird überwiegend im öffentlichen Personennahverkehr verwendet. Die Rückenlehne ist mit dem Sitzteil regelmäßig einstückig ausgebildet, so daß eine Sitzschale vorhanden ist. Die Sitzschale ist lediglich mit ihrem Sitzteil auf einem Gestell montiert. Einen Rahmen weist der Fahrgastsitz nicht auf.

Aus Kostengründen sowie aus Gründen einer Gewichtseinsparung soll die Sitzschale möglichst dünnwandig und leicht ausgebildet sein. Der dünnwandigen Ausbildung sind jedoch Grenzen durch die Stabilität und Festigkeit gesetzt. So können die bisher bekannten Sitze aus Gründen der Stabilität nicht so dünnwandig gemacht werden, wie es wünschenswert wäre.

Es ist Aufgabe der Erfindung einen eingangs genannten Fahrgastsitz derart auszubilden, daß er bei ausreichender Stabilität sehr dünnwandig ausgebildet werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung weist die Rückenlehne an ihren Längsseiten jeweils mindestens einen sich in Längsrichtung erstreckenden rohrförmigen Hohlraum auf. Durch diesen Hohlraum, welcher wie ein Kastenholm wirkt, erhält die Rückenlehne eine sehr große Stabilität. Im Bereich der Hohlräume ist die Biegestabilität sehr hoch. Die Hohlräume können sich in vorteilhafter Weise über die gesamte Länge der Rückenlehne erstrecken. Es ist jedoch auch möglich, daß sich die Hohlräume nur über einen Teilbereich der Rückenlehne erstrecken oder zwei oder mehrere Hohlräume auf jeder Seite parallel verlaufen.

Die Hohlräume sind dabei allseitig geschlossen und vorzugsweise leer, so daß sich in den Hohlräumen weder ein Stahlrohr noch ein anderer Formkörper oder ein nachträglich eingebrachtes Material befindet. Die Stabilität wird ausschließlich durch den bei der Herstellung allseits geschlossenen Umfang erzielt, wie er insbesondere mittels Gasinnendruckverfahren erzielt werden kann.

Bevorzugt ist deshalb der Querschnitt des Hohlraumes nicht eckig, sondern rund oder oval ausgebildet. Bei eckigen Außenquerschnitten ergeben sich Materialanhäufungen in den Ecken, was die Stabilität kaum fördert, jedoch den Materialeinsatz und damit das Gewicht des Sitzes überdurchschnittlich stark erhöht. Diese Materialanhäufung kann jedoch beabsichtigt sein, beispielsweise in den unten liegenden Längskanten der Hohlräume der Sitzfläche, um eine Verschraubung des Sitzes gegenüber einem Grundgestell durch die Eckbereiche der Hohlprofile hindurch anzuordnen, wodurch die Schrauben wegen der größeren Materialstärke in diesem Bereich einen höheren Rückhalt finden.

Wenn darüber hinaus diese allseits geschlossenen Hohlprofile einstückig zusammen mit dem Mittelteil, also Sitzfläche und/oder Lehne, ausgebildet sind, und dabei auf einen gleichmäßigen Übergang ohne Einkerbung geachtet wird, ergibt sich auch eine ideal stabile Verbindung der Hohlräume mit dem Rest des Sitzes.

Dabei können die seitlichen Hohlräume zur weiteren Verbesserung der Stabilität auch wenigstens am oberen und unteren Ende über sich quer erstreckende Abschnitte miteinander verbunden sein, und auf diese Art und Weise ein entweder den gesamten Sitz oder die Rückenlehne bzw. die Sitzfläche allseits umschließendes, abgeschlossenes leeres Hohlprofil gebildet werden.

Es ist besonders vorteilhaft, wenn auch das Sitzteil an seinen Seiten sich in Längsrichtung erstreckende Hohlräume aufweist. Hierbei ist es besonders günstig, wenn die Hohlräume der Rückenlehne in die Hohlräume des Sitzteils übergehen. Es würde sich hierdurch auf jeder Seite des Fahrgastsitzes ein Hohlraum ergeben, welcher sich durchgehend vom oberen Bereich der Rückenlehne bis zum vorderen Bereich des Sitzteils erstreckt. Derart durchgehende Hohlräume geben dem Fahrgastsitz eine sehr hohe Stabilität, besonders wenn auch der Mittelteil, also Sitzfläche und Lehne, einstückig durchgehen.

Des weiteren hat sich eine Ausführungsform der Erfindung als besonders vorteilhaft herausgestellt, bei der die Rückenlehne doppelwandig ausgebildet ist. Durch die Doppelwandigkeit wird die Stabilität der Rückenlehne stark erhöht. Die Rückenlehne - und in gleicher Weise separat oder auch zusammen mit der Rückenlehne - kann doppelwandig hergestellt werden durch wiederum allseits umschlossene Hohlräume, oder lediglich an den stirnseitigen Enden offene Hohlräume, die wiederum sich in Längsrichtung, also parallel zu den Außenkanten des Sitzes, erstrecken. Um von der Spritzform her die notwendige Unterteilung der einzelnen Hohlräume zueinander zu schaffen, muß die Spritzform entsprechende Stegwände aufweisen, die sich quer zur Ebene der Sitzfläche bzw. Rückenlehne wenigstens von einer Seite her erstrecken. Wenn eine durchgehend glatte Sitzfläche bzw. Rückenlehne von der Benutzerseite her gewünscht ist, können die Stege nur von der Rückseite her in das Werkstück hineinragen und entsprechend geformte tief einschneidende Nuten bilden.

Bei Vorstehen der Stegwände in beide Richtungen sind sowohl von der Benutzerseite als auch von der Rückseite her die entsprechenden Einkerbungen im fertigen Spritzteil sichtbar, jedoch weniger tief, und können zusätzlich Durchbrüche bzw. Langlöcher aufweisen, die der Belüftung von Sitzfläche bzw. Rückenfläche dienen.

Zusätzlich oder anstatt der längs verlaufenden Hohlräume im Mittenbereich des Sitzes sind auch quer verlaufende Hohlräume und damit auch sich kreuzende längs und quer verlaufende Hohlräume möglich.

Besonders günstig ist es, wenn die außenseitige Wand der Rückenlehne als Deckel ausgebildet ist.

Dies hat den Vorteil, daß die Rückseite der Rückenlehne ausgewechselt werden kann. Dies ist besonders zweckmäßig, wenn die rückseitige Wand der Rückenlehne beschädigt ist. Die rückseitige Wand der Rückenlehne könnte auch mit einer Werbung versehen sein, welche dann auf einfache Weise gegen eine andere Werbung ausgetauscht werden kann. Darüber hinaus kann durch unterschiedliche Ausbildung des Deckels die Stabilität der Rückenlehne variiert werden.

Als besonders günstig hat sich auch eine Ausführungsform des Fahrgastsitzes herausgestellt, bei dem zwischen den beiden Wänden der Rückenlehne wenigstens ein Hohlraum besteht. Durch diesen Hohlraum wird eine Kammer gebildet, welche im Hinblick auf die Stabilität der Rückenlehne wie ein Kastenholm oder Rohr wirkt.

Besonders vorteilhaft ist es, wenn der Deckel auf die innenseitige Wand der Rükkenlehne aufgeklebt ist. Bei Verwendung eines Klebers, welcher in Zugrichtung eine sehr große Haftkraft aufweist und in Scherrichtung eine geringe Haftkraft aufweist, läßt sich der Deckel beispielsweise durch Verschieben nach oben leicht von der innenseitigen Wand entfernen. Bei Verwendung eines derartigen Klebers ist es besonders vorteilhaft, wenn der Deckel beispielsweise im unteren Bereich mit der innenseitigen Wand verschraubt ist. Der Deckel ist zweckmäßigerweise als Schale ausgebildet, welche abgebogene Ränder hat. Die abgebogenen Ränder bieten eine gute Fläche zum Verkleben des Deckels mit der innenseitigen Wand. Darüber hinaus könnte die innenseitige Wand Ausnehmungen aufweisen, in welche die abgebogenen Ränder des Deckels eingreifen, so daß der Deckel auf die innenseitige Wand aufgeklipst werden kann.

Bei einer weiteren besonderen Ausführungsform der Erfindung weist die innenseitige Wand Stege auf, welche in entsprechende Ausnehmungen des Deckels eingreifen. Durch die Stege, welche als Rippen in Längsrichtung der Rückenlehne verlaufen können, erhält die Rückenlehne eine zusätzliche Stabilität. Die Stege können mit den Ausnehmungen des Deckels verklebt sein. Besonders günstig ist es jedoch, wenn die Stege als Rastnasen ausgebildet sind, welche in die Ausnehmungen einrasten. Hierdurch läßt sich die Verbindung sehr leicht herstellen. Selbstverständlich können die Stege anstatt auf der innenseitigen Wand auch am Deckel angebracht sein und die Ausnehmungen statt am Deckel an der innenseitigen Wand ausgebildet sein.

Weitere Vorteile der vorliegenden Erfindung ergeben sich aus der nachfolgenden Beschreibung eines besonderen Ausführungsbeispiels unter Bezugnahme auf die Zeichnung.

Es zeigen
- Figur 1:: eine erfindungsgemäße Sitzschale eines Fahrgastsitzes von der Seite,
- Figur 2:: die in Figur 1 dargestellte Sitzschale von hinten,
- Figur 3:: einen Querschnitt der Rückenlehne der in Figur 1 und Figur 2 dargestellten Sitzschale,
- Figur 4:: eine zweite Ausführung eines erfindungsgemäßen Fahrgastsitzes in perspektivischer Darstellung,
- Figur 5:: einen Schnitt durch eine erste Ausführungsform einer Rückenlehne des in Figur 4 dargestellten Fahrgastsitzes und
- Figur 6:: einen Schnitt durch eine zweite Ausführungsform einer Rückenlehne des in Figur 4 dargestellten Fahrgastsitzes,
- Fig. 7:: eine weitere Variante der Sitzschale von vorn,
- Fig. 8:: ein Querschnitt der Rückenlehne der in Fig. 7 dargestellten Sitzschale,
- Fig. 9:: eine andere Querschnittsform der in Fig. 7 dargestellten Sitzschale,
- Fig. 10:: eine weitere Querschnittsform der in Fig. 7 dargestellten Sitzschale,
- Fig. 11:: eine weitere Version der Sitzschale in Frontansicht,
- Fig. 12:: einen Längsschnitt durch die Sitzschale der Fig. 11, und
- Fig. 13:: eine andere Längsschnittvariante der Sitzschale der Fig. 11.

Wie den Figuren entnommen werden kann, ist die Sitzschale eines Fahrgastsitzes als einstückiges Kunststoffspritzteil ausgebildet. Die Sitzschale weist ein Sitzteil 1 und eine daran befestigte Rückenlehne 2 auf. An beiden Seiten der Rückenlehne 2 erstrecken sich in Längsrichtung Hohlräume 3, 4. Die Hohlräume 3, 4 sind durch Gasinnendrucktechnik hergestellt, wodurch ihr Querschnitt 5, 6 ovalförmig ist. Die Hohlräume 3, 4 erstrecken sich vom oberen Bereich der Rückenlehne 2 bis zum vorderen Bereich des Sitzteils 1.

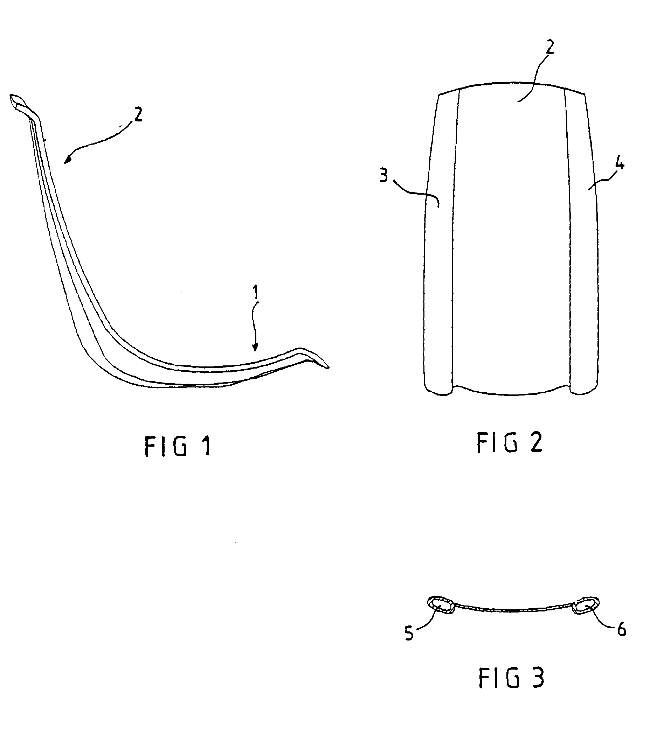

Die Hohlräume 3, 4 sind allseitig, auch an den Stirnseiten, geschlossen, und können gleichbleibenden Querschnitt über die gesamte Länge aufweisen oder - wie in den Figuren 1 und 2 ersichtlich - einen größeren Querschnitt im mittleren Bereich, der zu den freien Enden hin kontinuierlich, vorzugsweise langsam abnimmt, so daß der Querschnitt nahe der freien Enden nur noch etwa den halben Durchmesser des Querschnitts im Mittelbereich, also am Übergang von Sitzteil 1 zu Rückenlehne 2, aufweist.

Wie in Fig. 2 strichpunktiert angedeutet, können die Hohlräume 3, 4 zusätzlich wenigstens am oberen Ende der Rückenlehne 2 und am unteren Ende des Sitzteiles 1 einen sich quer erstreckenden Bereich aufweisen, der die Hohlräume 3, 4 zu einem ringförmig in sich geschlossenen einzigen Hohlraum vereinigt. Bei der Herstellung nach dem Gasinnendruckverfahren ist dabei das Einspritzen von Gas und Aufblähen des noch flüssigen Kunststoffes an mehreren Stellen entlang der Längserstreckung des Hohlraumes notwendig.

Die obere Querverbindung eines solchen Hohlraumes kann gleichzeitig als Griff zum Festhalten am Sitz benutzt werden, so daß vorzugsweise direkt unterhalb des quer verlaufenden Bereiches eine ovale querliegende Grifföffnung vorgesehen ist, so daß der Außenumfang des quer verlaufenden Teiles des Hohlprofiles eine glatte, absatzlose Außenfläche bildet.

Wie Fig. 3 zeigt, ist bei einer ovalen Querschnittsform das Oval mit seiner großen Längsachse etwa parallel zur Sitz- bzw. Lehnfläche angeordnet und geht auf der Benutzerseite des Sitzteiles vorzugsweise eben in die Sitzfläche bzw. Rückenlehnfläche über, und steht dafür bei einem einschaligen Mittelbereich von Rückenlehne 2 bzw. Sitzfläche 1 nach hinten über deren Querschnitt vor.

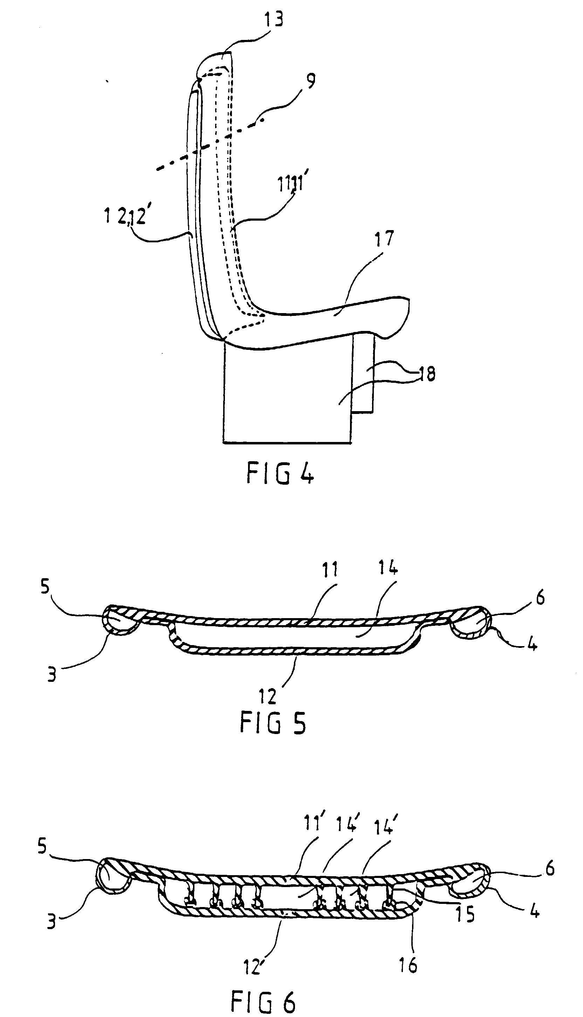

Wie der Figur 4 entnommen werden kann, besteht ein zweite Ausführungsform eines erfindungsgemäßen Fahrgastsitzes aus einer Sitzschale, welche aus einem Sitzteil 17 und einer Rückenlehne 13 besteht. Das Sitzteil 17 ist auf Füßen 18 angeordnet.

Im Unterschied zu der Lösung nach Figuren 1 bis 3 ist die Rückenlehne 13 der Sitzschale ist doppelwandig ausgebildet und besteht aus einer innenseitigen Wand 11, 11' und einer außenseitigen Wand 12, 12. Die Sitzschale weist kein Sitzgestell auf. Einen Schnitt durch die Rücken lehne 13 entlang der Linie 9 ist in den Figuren 5 und 6 dargestellt.

Wie der Figur 5 entnommen werden kann, ist die rückwärtige Wand 12 der Rückenlehne 13 als schalenförmiger Deckel ausgebildet. Die Ränder des Deckels 12 sind nach außen abgebogen, so daß sie parallel zur innenseitigen Wand 11 der Rückenlehne 13 und im Abstand zum Hauptteil des Deckels 12 verlaufen. Der Deckel 12 ist mit seinen abgebogenen Rändern auf der innenseitigen Wand aufgeklebt. Die innenseitige Wand 11 weist eine Ausnehmung auf, deren Tiefe der Dicke der abgebogenen Ränder des Deckels 12 entspricht, so daß zwischen den abgebogenen Rändern des Deckels 12 und der innenseitigen Wand 11 nahezu kein sichtbarer Übergang besteht. Die Ausnehmung könnte auch so ausgebildet sein, daß die abgebogenen Ränder des Deckels 12 zumindest teilweise von der innenseitigen Wand 11 übergriffen werden und dort eingespritzt werden können. Hierdurch läßt sich der Deckel 12 auf die innenseitige Wand 11 aufklipsen. Auch ein unmittelbares Angrenzen der Ränder des Deckels 12 an die Innenränder der Hohlprofile 3, 4 ist möglich.

Wie der Figur 6 entnommen werden kann, kann die innenseitige Wand 11' der Rückenlehne 13 auch Stege 15 aufweisen, welche sich als Rippen in Längsrichtung der Rückenlehne 13 von der Benutzerseite weg erstrecken. Der Deckel 12' enthält an den Stegen 15 korrespondierenden Stellen Elemente 16, welche Ausnehmungen bilden, in welche die Stege 15 eingreifen. Die Stege 15 können mit den Ausnehmungen 16 verrastbar ausgebildet sein. Sie können aber auch mit den Ausnehmungen 16 verklebt sein. Durch die Stege 15 werden zwischen der innenseitigen Wand 11' und dem Deckel 12' mehrere Hohlräume 14' gebildet, die an den stirnseitigen Enden offen oder ebenfalls geschlossen sein können. Der Deckel 12 kann sich entlang nur der Rückenlehne oder gewinkelt entlang Rückenlehne 2 und Sitzteil 1 erstrecken.

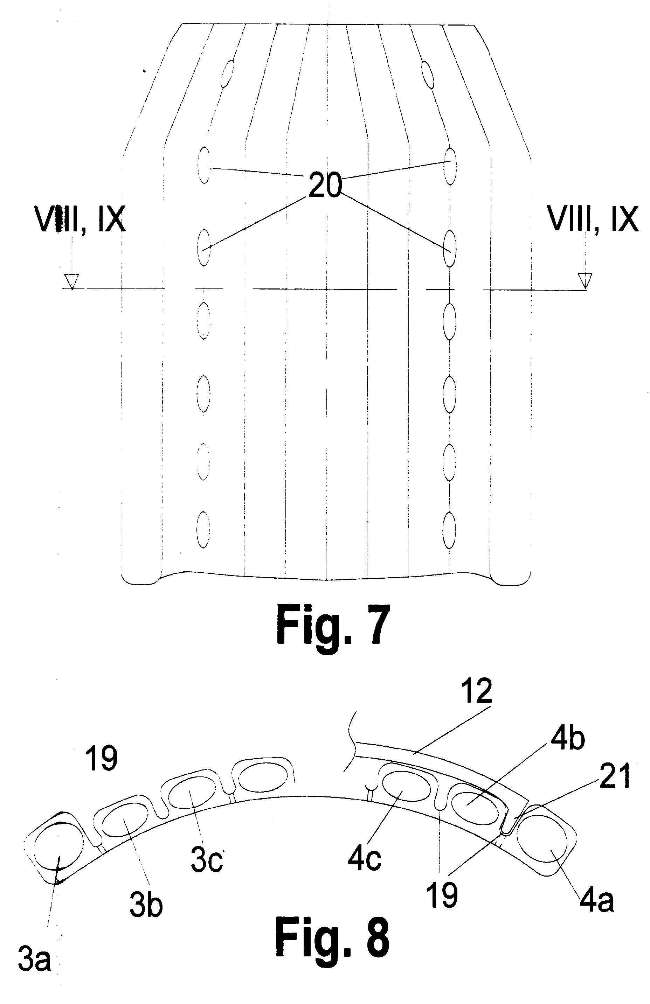

Fig. 7 zeigt eine Frontansicht der Sitzschale, wobei die zugehörigen verschiedenen Querschnittsvarianten in den Figuren 8 - 10 dargestellt sind.

Übereinstimmend ist dabei, daß sich nicht nur randseitig je ein Hohlraum 3, 4 entlang der ganzen Länge der Sitzschale, also von der oberen Kante der Rückenlehne 2 bis zum vorderen Ende der Sitzfläche 1, erstrecken, sondern mehrere solcher Hohlräume 3a, 3b, 3c, ..., 4a, 4b, 4c, ... nebeneinander, wodurch die gesamte Breite der Sitzschale abgedeckt wird.

Sofern der Sitz - wie in Fig. 7 dargestellt - oben etwas schmäler zusammenläuft, können sich die Querschnitte der Hohlräume 3a, 3b nach oben etwas verjüngen, oder die mittleren Hohlräume erst vom oberen Rand zurückversetzt beginnen.

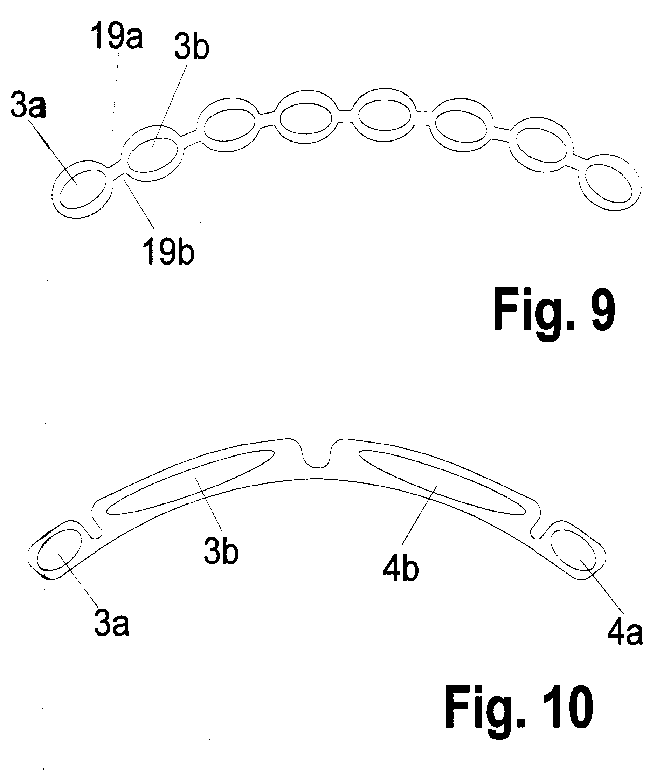

In den Figuren 8 und 9 sind Querschnittsformen dargestellt, bei denen die einzelnen Hohlräume 3a, 3b, 3c, ..., 4a, 4b, 4c, ... jeweils in etwa den gleichen Querschnitt aufweisen.

Um mit dem Gasinnendruckverfahren gegeneinander abgetrennte Hohlräume zum Einpressen von Gas zu erzielen, sind zwischen den einzelnen Hohlräumen nutförmige Einschnitte 19, die sich parallel zu den Hohlräumen 3a, 3b, 3c, ..., 4a, 4b, 4c, ... erstrecken, vorgesehen, die durch entsprechende Vorsprünge des umgebenden Formteiles beim Herstellen des Spritzteiles gebildet werden.

Dabei können - wie in Fig. 8 dargestellt - die Einschnitte 19 nur von der Rückseite der Sitzschale her eingebracht werden, so daß auf der Benutzerseite eine durchgehend glatte, weitestgehend ebene, Lehne bzw. Sitzfläche gegeben ist.

Im Bereich der Einschnitte 19 können dabei diese Rückenlehne bzw. Sitzfläche, die dort nur einschalig ist, mit Durchbrüchen 20 zur besseren Belüftung des Sitzes versehen sein, vorzugsweise ausgebildet als Langlöcher. Zusätzlich kann die auf diese Art und Weise mit Nuten versehene Rückseite des Sitzes, die schwer zu reinigen ist, durch einen aufgesetzten Deckel 12'' abgedeckt sein, der insbesondere dadurch befestigt wird, daß gegen die Sitzschale vorstehende, insbesondere randseitige, Stege 21 zumindest am Rand, eventuell zusätzlich im mittleren Bereich, in die entsprechenden Einschnitte 19 eingreifen und dort entweder verrastet oder verklebt sind. Dabei muß der Deckel 12'' kaum etwas zur Stabilität des Sitzes beitragen, sondern dient nur der Bildung einer ebenen Außenfläche auf der Rückseite, um einerseits das Reinigen zu erleichtern und andererseits eventuell dort Informationen, Werbung oder anderes unterbringen zu können.

Im Gegensatz dazu ragen bei der Lösung gemäß Fig. 9 die Einschnitte 19a, 19b sowohl von der Rückseite als auch von der Vorderseite zwischen die Hohlräume 3a, 3b, ... hinein. Auf diese Art und Weise ist die Tiefe und damit die Verschmutzungsfreudigkeit im Vergleich zur Breite der Einschnitte deutlich geringer, andererseits ist dadurch jedoch auch auf der Benutzerseite keine durchgehend ebene Sitzfläche bzw. Lehnfläche mehr vorhanden.

Auch hier können in dem einschichtigen Bereich zwischen den Hohlräumen Durchbrüche 20 im Grunde der Einschnitte 19 von der Vorder- zur Rückseite durchgehend zwecks Belüftung vorgesehen sein.

Zusätzlich kann auch hier - wie in Fig. 8 dargestellt - eine Abdeckung in Form eines Deckels 12'' vor allem auf der Rückseite, aber auch auf der Frontseite, zwecks Erzielung einer glatten Oberfläche vorgesehen werden.

Fig. 10 zeigt demgegenüber eine Querschnittslösung, bei der die Hohlräume 3b, 4b, die nicht den äußersten Hohlraum darstellen, eine deutlich größere Breite als die randseitigen Hohlräume 3a, 3b aufweisen. Dies bedingt eine geringere Stabilisierung des mittleren Bereiches als bei Anordnung einer größeren Anzahl Hohlräume mit gleichbleibend geringerem Querschnitt nebeneinander, jedoch ist dies im mittleren Bereich der Sitzfläche und Lehne möglicherweise ausreichend, spart jedoch gegenüber den Lösungen der Figur 8 und 9 möglicherweise Material und damit Gewicht.

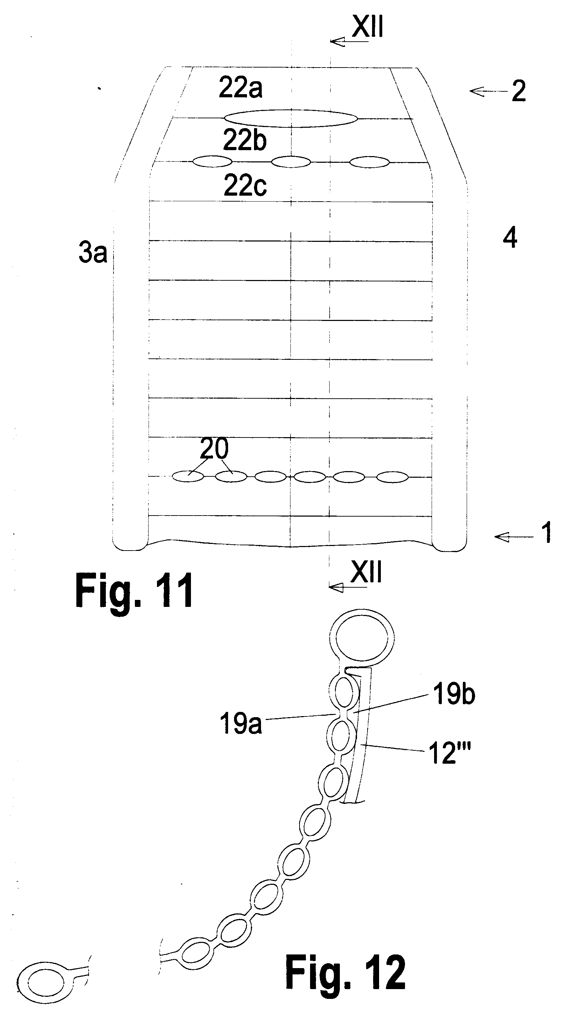

Fig. 11 zeigt eine Sitzschale in der Frontansicht, bei der ebenfalls wiederum die allseitig geschlossenen Hohlräume 3, 4 entlang der Außenkanten vom oberen Ende der Rückenlehne 2 bis zum vorderen Ende der Sitzschale 1 durchgehen.

Der Mittenbereich des Sitzes zwischen den randseitigen Hohlräumen 3a, 3b ist jedoch durch quer verlaufende Hohlräume 22a, 22b, 22c gebildet, die wiederum jeweils allseitig geschlossen sind, also vorzugsweise nicht in die randseitigen längs verlaufenden Hohlräume 3, 4 hinsichtlich des Innenraumes übergehen.

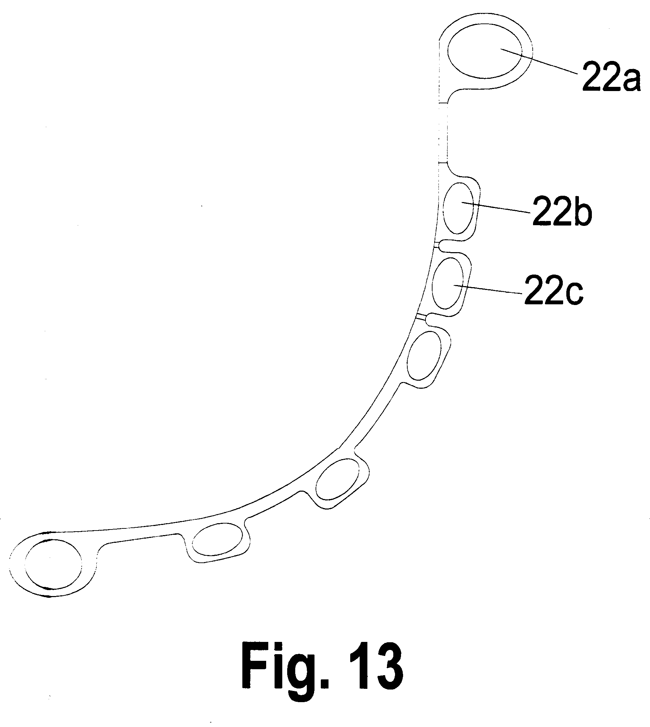

Dabei bietet sich wiederum die Möglichkeit, gemäß Querschnittsdarstellung der Fig. 13 eine glatte Benutzerseite zu schaffen, und die Hohlprofile 22a, 22b, 22c ... nur auf die Rückseite überstehen zu lassen.

Im Zwischenbereich, der dann wiederum einschalig ist, können wiederum Durchbrüche 20 zwecks Belüftung, insbesondere in Langlochform, vorgesehen werden, und insbesondere unterhalb des obersten Hohlraumes 22a ein größerer, quer verlaufender Längsschlitz als Grifföffnung vorgesehen sein.

Gemäß Fig. 12 können die Einschnitte 19 zwischen den einzelnen Hohlprofilen auch wiederum von beiden Seiten, also Frontseite und Rückseite, her eingebracht werden und damit eine verringerte Tiefe aufweisen. Die dadurch unebene Benutzerseite wird bei quer verlaufenden Strukturen, wie im vorliegenden Fall, als angenehmer empfunden als bei längs verlaufenden wenigen Einzelsträngen.

Auch hier kann vor allem die Rückseite, aber auch die Vorderseite, wiederum mittels eines Deckels 12''' abgedeckt sein, der wiederum durch Verrasten oder Verkleben mit Hilfe von Stegen, die in die Einschnitte 19 eingreifen, vorzugsweise befestigt sein kann, und primär der Erzielung einer glatten Außenfläche dient.

Vor allem bei der Lösung gemäß Fig. 13, bei der die Hohlprofile 22a, 22b, 22c, ... nur nach hinten überstehen, kann durch gezielte Beabstandung der Hohlprofile zueinander ein definiertes Biegeverhalten der Sitzschale erreicht werden, also es können gezielt z. B. der Übergangsbereich zwischen Sitzteil 1 und Rückenlehne 2 biegsamer gestaltet werden als die übrigen Bereiche, oder einzelne Bereiche der Rückenlehne steifer als andere Bereiche gestaltet werden, je nach Abstand der Hohlprofile 22a, 22b, 22c, ... zueinander, deren jeweiliger Wandstärke sowie der Wandstärke des dazwischen verbleibenden einschaligen Bereiches.

Auch die in den Figuren 7 - 12 dargestellten Lösungen sind jeweils einstückige Spritzgußteile, mit allseitig, also rundum geschlossenen, innen leeren, Hohlräumen 3, 4 bzw. 3a, 3b, ..., 4a, 4b, ... bzw. 22a, 22b, 22c, ...

## Patentansprüche

1. Fahrgastsitz für ein Personenbeförderungsfahrzeug, welcher als Kunststoffspritzteil hergestellt ist, mit einem Sitzteil (1) und einer daran befestigten Rücken lehne (2), dadurch gekennzeichnet, daß die Rückenlehne (2) an ihren Längsseiten jeweils einen mindestens sich in Längsrichtung erstreckenden rohrförmigen Hohlraum (3, 4) aufweist.

2. Fahrgastsitz nach Anspruch 1,
**dadurch gekennzeichnet, daß**
das Sitzteil (2) an seinen Seiten jeweils mindestens einen sich in Längsrichtung erstreckenden rohrförmigen Hohlraum aufweist.

3. Fahrgastsitz nach Anspruch 2,
d**adurch gekennzeichnet, daß**
die Hohlräume der Rückenlehne jeweils in die Hohlräume des Sitzteils übergehen.

4. Fahrgastsitz nach einem der Ansprüche 1 bis 3,
**dadurch gekennzeichnet, daß**
die Hohlräume durch Gasinnendrucktechnik hergestellt sind.

5. Fahrgastsitz nach einem der Ansprüche 1 bis 4,
**dadurch gekennzeichnet, daß**
die Rückenlehne (13) doppelwandig ausgebildet ist

6. Fahrgastsitz nach Anspruch 5,
**dadurch gekennzeichnet, daß**
die außenseitige Wand (12,12') der Rückenlehne (13) als Deckel (12, 12') ausgebildet ist.

7. Fahrgastsitz nach Anspruch 5 oder 6,
**dadurch gekennzeichnet, daß**
zwischen den beiden Wänden (11,12,11',12') der Rückenlehne (13) ein Hohlraum (14, 14') besteht.

8. Fahrgastsitz nach Anspruch 7,
**dadurch gekennzeichnet, daß**
der Deckel (12, 12') auf die innenseitige Wand (11,11') der Rückenlehne (13) aufgeklebt ist.

9. Fahrgastsitz nach Anspruch 7 oder 8,
**dadurch gekennzeichnet, daß**
die innenseitige Wand (11') Stege (15) aufweist, welche in entsprechende Ausnehmungen (16) des Deckels (12') eingreifen.

10. Fahrgastsitz nach Anspruch 9,
**dadurch gekennzeichnet, daß**
die Stege (15) als Rastnasen ausgebildet sind, welche in die Ausnehmungen (16) einrasten.
